# EUROPEAN PATENT APPLICATION

(11) **EP 0 846 942 A2**
(43) Date of publication of application: **10.06.1998**
(21) Application number: 97121050.5
(22) Date of filing: 01.12.1997
(51) Int. Cl.: G01M 3/38

(54) **Detection device for monitoring spaces in culverts and method for carrying through said monitoring**

(30) Priority: 06.12.1996 SE 9604514
(71) Applicant: Ingenjörsfirma Ultrac AB, S-416 57 Göteborg (SE)
(72) Inventor: Lange, Gösta, S-416 57 Göteborg (SE)
(74) Representative: Wagner, Karl Heinz

(57) **Abstract**

The present invention relates to a device and a method for monitoring and determining the presence of water in spaces, which are situated in places that are difficult to get at, preferably in branch chambers in distribution systems for district heating. The device comprises three main members, a first light guiding cable (2), an indicating member (4) and a second light guiding cable (3), whereby the first light guiding cable (2) with a first end (2a) thereof extends downwardly towards the bottom of the space while a second end (2b) of said first light guiding cable extends to a place outside the chamber and is illuminated for generating a beam of light which is propagated in the cable (2), that the second light guiding cable (3) with a first end (3a) thereof also extends downwardly towards the bottom (1a) of the space (1) in such a manner that transfer of light is possible between the lower ends (2a, 3a) of said first and second cables (2 and 3 respectively), that the second light guiding cable (3) with its second end (3b) extends to a place outside the chamber where inspection may be carried through in this second end (3b), and that the indicating member is located in the light path between the lower ends (2a, 3a) of said cables for obstructing the light beams or changing the colour, intensity, flow or similar of said light beams when water is present in the chamber.

## Description

### Technical field of the invention

The present invention relates to a device and a method for detection for monitoring and determining the presence of water in spaces, which spaces are situated in places that are difficult to get at, preferably in branch chambers, so called culvert chambers, in distribution systems for district heating.

### Technical background of the invention

In distribution systems for district heating there are chambers located at regular distances wherein the conduits branch-off to consuming properties. These chambers should be dry in order to avoid energy losses and corrosion. If losses are found during measurements in the distribution system, all chambers must be controlled and measures taken until the losses decrease or cease. If the water is not removed, the entire district heating network may be damaged, requiring subsequent extensive and expensive repairs.

Various solutions to this problem have been presented and one proposed solution is to locate a level sensor in the chamber and connect it to a transponder, i.e. an electronic transmitter which can be activated by a radio transmitter outside the chamber. This transponder returns information from the depth of the chamber. Another solution is to provide a float or rocker with electric contact which is affected when the rocker, when there is water in the chamber, rise to the surface and causes a change of signal which can be transferred through lines or conductors which are mounted along the district heating pipes. The drawback with these prior art devices is that they require electric current in the chambers for their operation, either from the mains voltage or from a battery which must be changed from time to time. These electronic units are relatively expensive and susceptible to moisture.

The most common model however, for solving said inspection problem, is still to manually remove the heavy cast-iron covers over the descents to the chambers, which is hard work with a great risk for injuries on the operator. In the winter, snow and ice also cause great problems when the covers often must be removed with iron bars. This can take time and increases the risk for injuries on the operator, while said covers over the chambers are often located under heavily trafficked streets. This method also form traffic obstacles when barrings with warning cones often must be set up during the operation for increasing the safety of the operator.

### Summary of the invention

The object of the present invention is to eliminate the abovementioned drawbacks during inspection and reading of eventual presence of water in spaces which are situated in places that are difficult to inspect, preferably in branch chambers in distribution systems for district heating.

The main or primary object of the invention is to provide a device and a method for remote reading of eventual presence of water in chambers in district heating systems, whereby said reading may occur at a relatively great distance from the chamber.

Another object of the invention is to provide a device and a method for carrying through a reading without the requirement of electric current.

A further object is to provide a device and a method which are safe, flexible and inexpensive to manufacture and operate.

Another object of the invention is to provide a device and a method which can be carried through by a single person.

Another object of the invention is to provide a device and a method that are relatively independent of wind and weather during reading.

According to the invention, said problems are solved while the device comprises three main members, a first light guiding cable, an indicating member and a second light guiding cable, whereby the first light guiding cable with a first portion thereof extends downwardly towards the bottom of the space while a second portion of said first light guiding cable extends to a place outside the chamber where light beams are generated e.g. by means of a flash light for illuminating the cable, and whereby the second light guiding cable with a first portion thereof also extends downwardly towards the bottom of the space in such a manner that transfer of light is possible between the lower ends of said first and second cables and that the second light guiding cable with its second portion extends to a place outside the chamber where inspection may be carried through, and that the indicating member is located in the light path between the lower ends of said cables for obstructing the light beams or changing the colour, intensity, flow or similar of said light beams when water is present in the chamber.

In the chamber, there is located a device which affects the transfer of light between the lower ends of the cables and this influence occurs depending on whether there is water in the chamber or not and the character of the light observed above ground will change depending on the presence of water or not.

### Brief description of the drawings

The invention will be further described below with reference to the accompanying drawings, wherein
fig. 1 is a vertical side view of the device;
fig. 2 illustrates an embodiment of the portion of the device located in the lower part of the chamber; and
fig. 3 illustrates an alternative embodiment of the portion of the device located in the chamber.

### Detailed description of a preferred embodiment of the invention

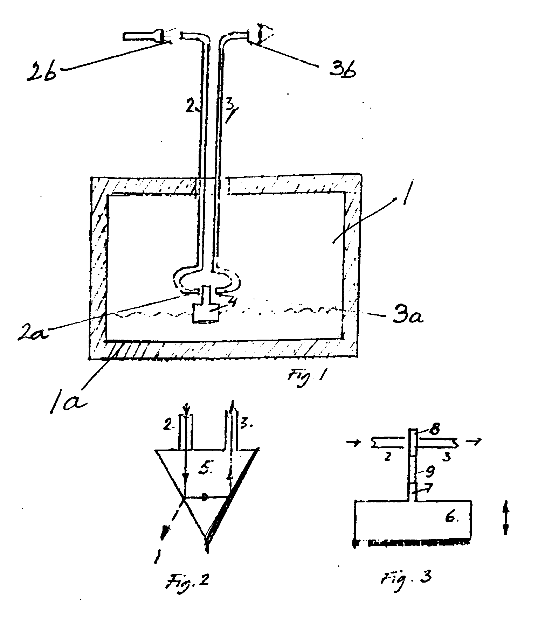

Fig. 1 is a vertical side view of the reading device according to the invention located in a culvert chamber 1, said device comprising a first and a second fiber optic cable or light guide 2 and 3 respectively. The first fiber optic cable 2 extends vertically downwards into the chamber 1 through a hole 10 in the cover 11 covering the culvert chamber 1. The second fiber optic cable 3 runs similarly down through the hole 10 in the cover 11 substantially in parallel with the first fiber optic cable 2. The lower portions of the fiber optic cables are bent such that the end surfaces 12, 13 of said cables 2, 3 are facing each other. An object 4 is provided between said end surfaces 12, 13 and adapted, when water is present in the chamber, to change or stop the light emanating from the illumination of the upper end surface of the first fiber optic cable 2 with e.g. a flash light, whereby the light beams propagate in this cable and, when the chamber is dry, are unimpededly collected by the end surface of the second fiber optic cable 3 and propagate to the upper end thereof, where the light emanates and is observed by preferably the same person who illuminates said first cable and thereby controls whether there is a dry chamber or not. At the presence of water, the light beams are stopped or changed and it is thus easy to determine that water is present.

In fig. 2, another embodiment of the portion of the device which is situated in the chamber 1 is shown. In this embodiment, the cables are attached to a prism wherein the light beams from the first cable 2 are refracted twice and propagate up into the second cable 3 if the prism is surrounded by air. If the prism is surrounded by water however, the light propagates out into the water, which can be easily read at the upper end of the second cable 3.

A still further embodiment of the portion of the device situated in the chamber 1, is shown in fig. 3. At this embodiment, the light beams are affected by a float 6 provided at the bottom of the chamber. The float 6 has an indicating device 7 consisting of two or more transparent differently coloured portions 8, 9. If no water is present, the light beams will pass through e.g. the green coloured portion 8, whereby light emanating from the end of the second cable 3 is green, which is easy readable. If there is water in the chamber, the float 6 will float on the water surface and the light beams thereby pass through the portion 9, which preferably is coloured red, and then, the light emanating from the end of the second cable 3 is red and the operator is made aware of the presence of water in the chamber.

Another embodiment of the lower portion of the device for affecting the flow of light can be to generate an air stream between the lower ends of the light guides 2, 3, which affects the light beams in dependence of whether there is water in the chamber or not.

It should be emphasized that the invention naturally can be modified within the scope of the following claims.

## Claims

1. Detection device for monitoring and determining the presence of water in spaces which are situated in places that are difficult to get at, preferably in branch chambers in culverts in distribution systems for district heating, **characterized in** that the device comprises three main members, a first light guiding cable (2), an indicating member (4) and a second light guiding cable (3), whereby the first light guiding cable (2) with a first end (2a) thereof extends downwardly towards the bottom of the space while a second end (2b) of said first light guiding cable extends to a place outside the chamber and is illuminated for generating a beam of light which is propagated in the cable (2), that the second light guiding cable (3) with a first end (3a) thereof also extends downwardly towards the bottom (1a) of the space (1) in such a manner that transfer of light is possible between the lower ends (2a, 3a) of said first and second cables (2 and 3 respectively), that the second light guiding cable (3) with its second end (3b) extends to a place outside the chamber where inspection may be carried through in this second end (3b), and that the indicating member is located in the light path between the lower ends (2a, 3a) of said cables for obstructing the light beams or changing the colour, intensity, flow or similar of said light beams when water is present in the chamber.

2. Detection device according to claim 1, **characterized in** that the indicating member (4) comprises an optical unit (5) which reflects or refracts the beam of light in different directions depending on whether water surrounds the unit or not.

3. Detection device according to claim 1, **characterized in** that the indicating member (4) comprises a floating part (6) having an arm (7) with different colour indicators which, when the beam of light strikes any of these indicators, indicate whether the chamber is dry or not.

4. Detection device according to claim 1, **characterized in** that the indicating member (4) constitutes an air stream between the lower ends of the light guides (2, 3), which affects the light beams depending on whether the chamber contains water or not.

5. Method for monitoring and determining by means of the device according to claim 1, the presence of water in spaces which are situated in places that are difficult to get at, preferably in branch chambers, so called culvert chambers, in distribution systems for district heating, **characterized by** illuminating by means of e.g. a flash light the surface of the upper end (2b) of the first light guiding cable (2), whereby the light is propagated in said cable (2) to the other end (2a) thereof and from there eventually to the lower end (3a) of the second cable (3) and further through this cable (3) to the upper end (3a) thereof where inspection can be carried through by the same operator which illuminates the upper end (2a) of the first light guiding cable.

6. Method for monitoring and determining the presence of water in spaces according to claim 5, **characterized by** feeding an air stream between the lower ends of the light guides (2, 3), which affects the light beams depending on whether the chamber contains water or not, thus affecting the flow of light, whereafter the inspection is carried through.
